# EUROPEAN PATENT SPECIFICATION

(11) **EP 3 480 085 B1**
(45) Date of publication and mention of the grant of the patent: **30.12.2020**
(21) Application number: 17199534.3
(22) Date of filing: 01.11.2017
(51) Int. Cl.: B62D 25/16, B62D 25/18

(54) **FENDER STRUCTURE FOR WORK MACHINE**
SCHUTZBLECHSTRUKTUR FÜR ARBEITSMASCHINE
STRUCTURE DE PROTECTION POUR MACHINE DE TRAVAIL

(43) Date of publication of application: 08.05.2019
(73) Proprietor: Motoseal Components Oy, 26100 Rauma (FI)
(72) Inventor: Eiras, Kaaro, 26100 Rauma (FI)
(74) Representative: Kolster Oy Ab

(56) References cited:
- EP-A2- 2 657 109
- DE-U1- 29 508 410

## Description

### FIELD OF THE INVENTION

The invention relates to a fender structure for a work machine, the fender structure comprising a fender arch and a fender arch support.

### BACKGROUND OF THE INVENTION

Work machines, such as tractors, wheel loaders, combination excavators, reach trucks and the like, use fender structures located above or around the work machine wheel to stop mud, water or other dirt from splashing when the work machine moves.

The fender structure comprises a fender arch and a fender arch support. The fender arch is a plate-like curved piece that settles above or around the wheel and stops mud, water and other dirt from splashing when the work machine moves. The fender arch support, in turn, is a support structure intended to be arranged in connection with the fender arch and its purpose is to support the fender arch in such a manner that it retains its shape. The fender structure is fastened to the work machine through a support arm that is connected to the fender arch support.

A typically used fender arch support is made of metal and comprises a frame part and an opening arranged in the frame part. The task of the frame part is to support the fender arch in such a manner that the fender arch retains its shape. The opening in the frame part of the arch support offers a fastening point for the support arm of the fender structure, and the end of the support arm that is directed toward the fender structure is located into the opening in the frame part of the arch support and fastened in place with bolts, for example. The opposite end of the support arm is, in turn, fastened to the work machine.

EP-publication 2657109 A2 discloses an arch support for a work machine fender according to the preamble of claim 1.

### BRIEF DESCRIPTION OF THE INVENTION

An object of the present invention is to provide a new type of fender structure and fender arch support for a work machine.

The fender arch support in accordance with the invention is characterised by the features of the independent claim.

An arch support for a work machine fender arch comprises a frame part and an adjustment part arrangeable on the frame part. The relative position of the frame part and the adjustment part are changeable to adjust a position of the fender arch to be arranged at the arch support.

As the fender arch support of a work machine comprises a frame part and adjustment part arranged in connection with the frame part in such a manner that an angular position of the arch support frame part can be altered in relation to the adjustment part, an angular position of the fender arch arranged at the arch support in relation to the wheel of the work machine can be easily adjusted to select the correct angular position of the fender arch in relation to the wheel of the work machine without needing to alter the position of the support arm, which connects the fender structure formed by the fender arch and arch support to the work machine, in relation to the work machine. The adjustment part may also be replaceable, whereby it is possible to use support arms of different size and shape with the same frame part of the arch support.

Some embodiments of the fender arch support and the fender structure are disclosed in the dependent claims.

### BRIEF DESCRIPTION OF THE DRAWINGS

In the following the invention will be described in greater detail by means of preferred embodiments with reference to the accompanying drawings, in which
Figures 1 and 2 are schematic representations of a fender structure as seen obliquely from above;
Figure 3 is a schematic side view of the fender structure;
Figure 4 is a schematic exploded side view of the fender structure;
Figure 5 is a schematic exploded view of the fender structure from below;
Figure 6 is a schematic representation of a fender arch support as seen obliquely from above;
Figure 7 is a schematic representation of the fender arch support of Figure 6 as seen obliquely from below;
Figure 8 is schematic representation of a detail of the fender arch support of Figures 6 and 7 from above;
Figure 9 is a schematic representation of an adjustment part of the fender arch support as seen obliquely from below;
Figure 10 is a schematic representation of the adjustment part of Figure 8 as seen obliquely from above; and
Figures 11, 12 and 13 are schematic representations, as seen obliquely from above, of a part of the fender arch support of Figure 6 with the adjustment part of Figure 8 placed in it in various positions.

In the figures, some embodiments of the invention are shown simplified for the sake of clarity. Like reference numerals identify like elements in the figures.

### DETAILED DESCRIPTION OF THE INVENTION

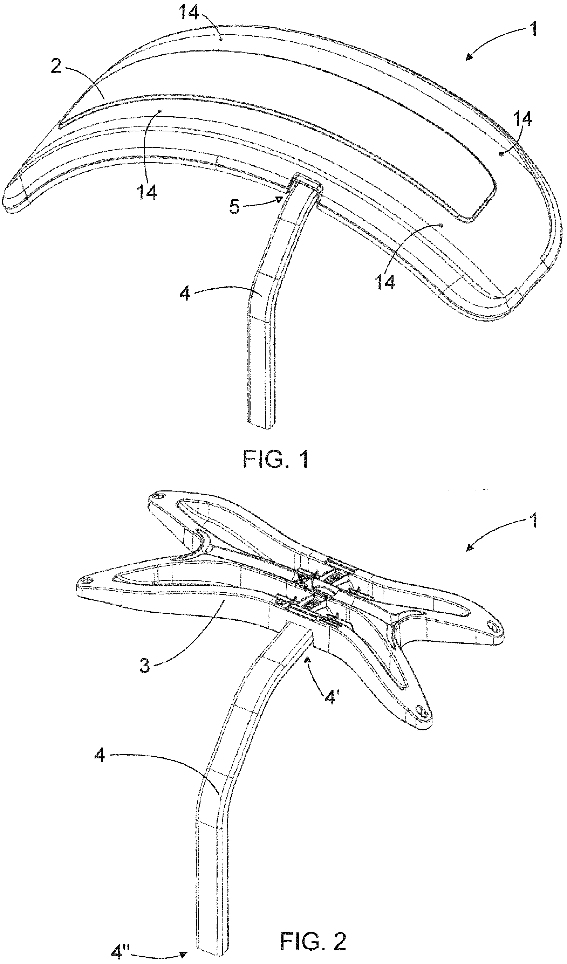

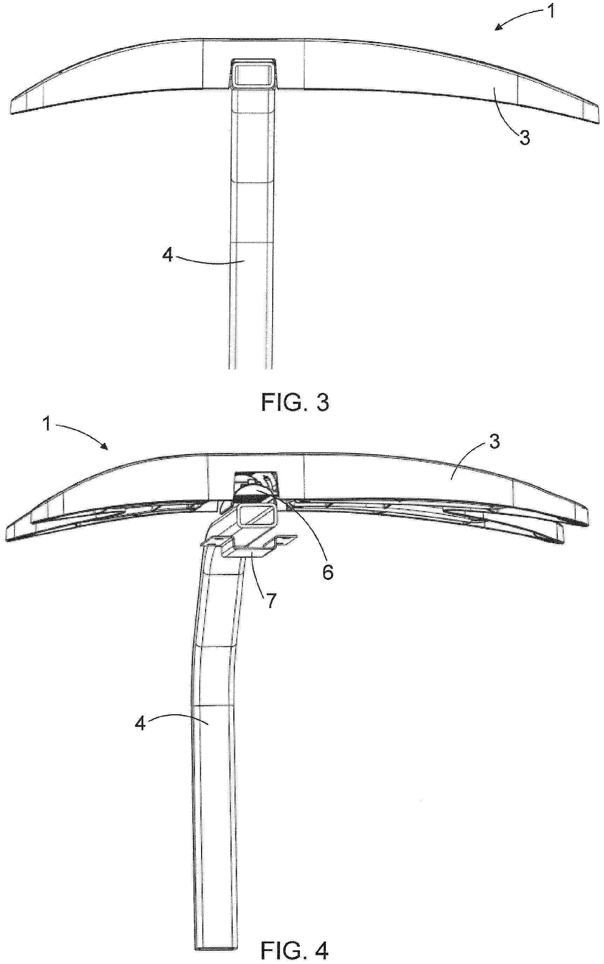

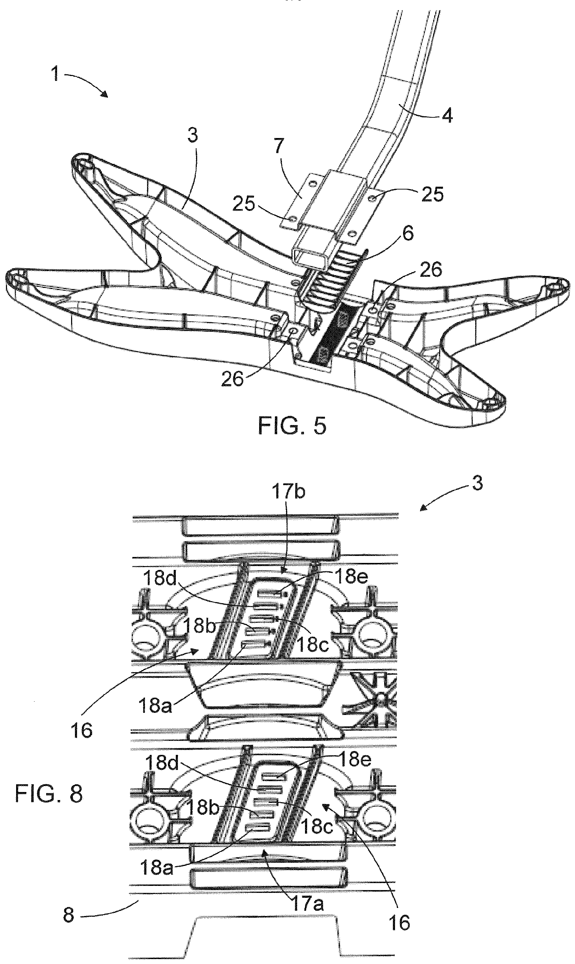

Figures 1 and 2 are schematic representations of a fender structure 1 as seen obliquely from above and Figure 3 is a schematic side view of the fender structure 1. Figure 4 is a schematic exploded side view of the fender structure 1 and Figure 5 is a schematic exploded view of the fender structure 1 from below. The fender structure 1 comprises a fender arch 2 shown in Figure 1 and a fender arch support 3 shown in Figures 2, 3, 4 and 5. The fender arch support 3, which may later in this specification also be referred to as the arch support 3, is fastened to the fender arch 2 on a downward facing side or surface of the fender arch 2 to support the fender arch 2 in such a manner that the fender arch 2 retains its shape. In the situations of Figures 2, 3, 4 and 5 the fender arch 2 has been removed from the arch support 3 to display the arch support 3. Figures 1, 2 and 3 further show a support arm 4 by which the fender structure 1 is fastened to the work machine. The work machine is not shown in the Figures for the sake of clarity. In the case of Figure 1, the support arm 4 goes through a boring 5 formed on the edge of the fender arch 2 to below the fender arch 2, where the first end 4' of the support arm 4 is fastened in connection with the arch support 3 fastened to the fender arch 2, and the second end 4" of the support arm 4 is fastened to the work machine. However, said boring 5 is not absolutely necessary and the edge of the fender arch 2 can be made lower or the support arm 4 can be arranged to go round the edge of the fender arch 2. The work machine, in which the fender structure 1 is used, may for example be an agricultural tractor, forest tractor, wheel loader, combination excavator, telescopic reach truck for lifting hay bales, sheets or other corresponding loads, or some other corresponding work machine that is used in demanding conditions and thus has high requirements for the robustness, rigidity and strength of the fender structure 1.

In Figures 4 and 5 it is further presented an adjustment part 6 which is intended to be fastened to the arch support 3. By means of the adjustment part 6 the fender arch 2 may be arranged at an intended position relative to an outer periphery of a wheel of the work machine as well as at an intended location relative to a lateral direction of the wheel of the work machine. Figures 4 and 5 further present a clamping part 7 by means of which the fender structure 1 comprising the fender arch 2, the arch support 3 and the adjustment part 6 can be fastened to the first end 4' of the support arm 4.

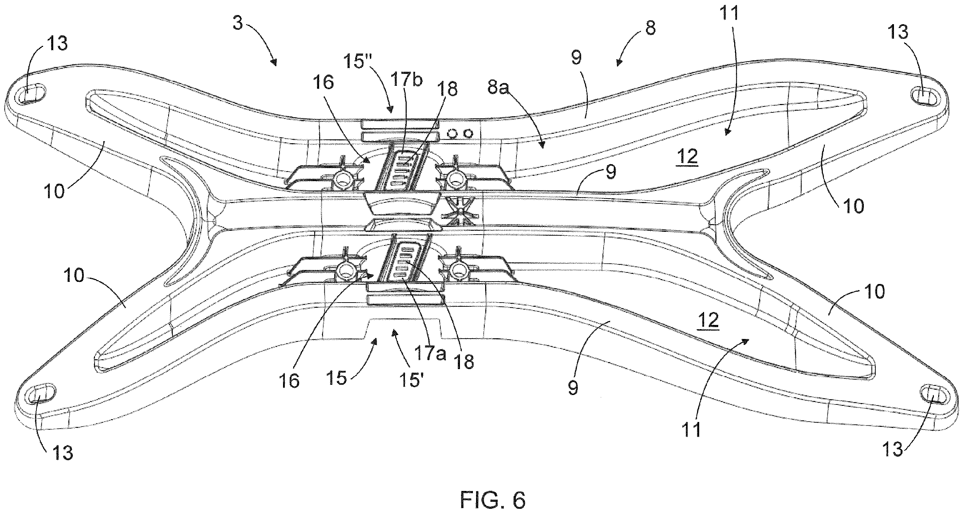

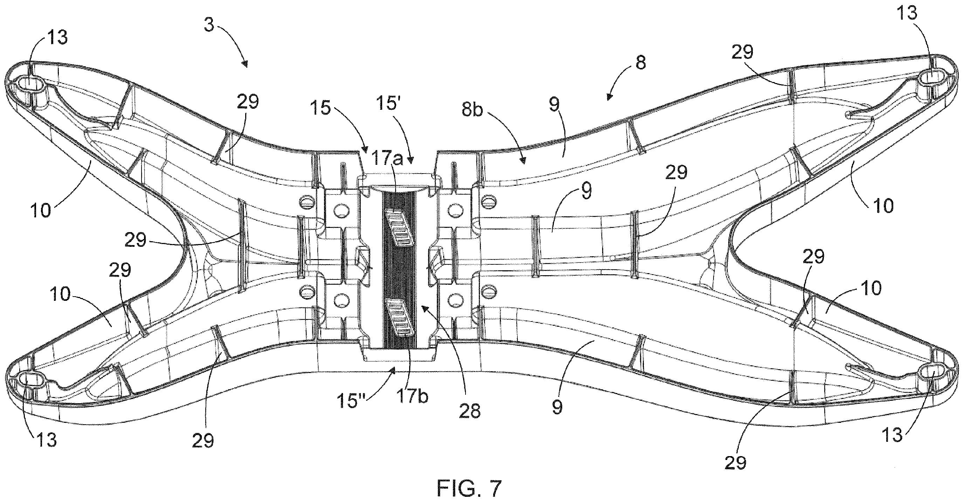

Figure 6 is a schematic representation of the fender arch support 3 as seen obliquely from above, Figure 7 is a schematic representation of the fender arch support 3 of Figure 6 as seen obliquely from below and Figure 8 is schematic representation of a detail of the arch support 3 of Figures 6 and 7 from above.

The arch support 3 comprises a frame part 8, which frame part 8 may later in this specification also be referred to as the frame 8. The frame 8 has a top side 8a or an upward facing side 8a intended to be directed upwards when the arch support 3 is introduced, and a bottom side 8b or a downward facing side 8b intended to be directed downwards when the arch support 3 is introduced. The shape of the frame 8 in the longitudinal direction of the arch support 3 is arranged at least to some extent to comply with the shape of the fender arch 2 in its longitudinal direction and the shape of the arch support 3 in its lateral direction is arranged at least to some extent to comply with the shape of the fender arch 2 in its lateral direction. The longitudinal direction of the fender arch 2 and thus also the longitudinal direction of the arch support 3 is defined to be parallel to the circumference of the work machine wheel. The lateral direction of the fender arch 2 and thus also the lateral direction of the arch support 3 is defined to correspond to the lateral direction of the work machine wheel. In turn, the elevation direction of the arch support 3 is perpendicular to both the longitudinal and lateral directions of the arch support 3, or in other words, substantially parallel to the direction of a vertical diameter of the work machine wheel.

The arch support 3 frame part 8 comprises a number of substantially longitudinally directed first ribs 9, in the example of the figures 6 three substantially longitudinally directed and upwards closed first ribs 9, which are interconnected with each other at their extreme ends with substantially laterally directed and upwards closed second ribs 10. The interconnected first ribs 9 and the second ribs 10 form a uniform structure. In the first ribs 9 and the second ribs 10 there are a number of partition wall 29 that prevent the buckling of the ribs 9, 10 during loading.

The interconnected ribs 9, 10 provide a number of intermediate spaces 11, in the example of the figures two intermediate spaces 11, between the ribs 9, 10. As seen from above of the arch support 3, the intermediate spaces 11 are closed by layers 12 of the material of the frame part 8. The layers 12 of the material of the frame part 8 is uniformly interconnected with the first ribs 9 and the second ribs 10, or in other words, the first ribs 9, the second ribs 10 and the layers 12 of the material of the frame part 8 provide a single uniform one piece structure so as to provide a rigid structure. Alternatively the intermediate spaces 11 could be at least partly open. At the extreme ends of the arch support 3 there are fastening openings 13 so that screws or corresponding fastening means can be tightened through fastening openings 14 in the fender arch 2 to the fastening openings 13 in the arch support 3 to fasten the arch support 3 to the fender arch 2. The design of the frame part 8 as disclosed above has the effect that when a loading is subjected to the frame part 8 in the direction of the fastening openings 13 as it takes place during the use of the frame part 8, the pressure subjected to the frame part 8 due to that loading is divided substantially evenly in the structure of the frame part 8.

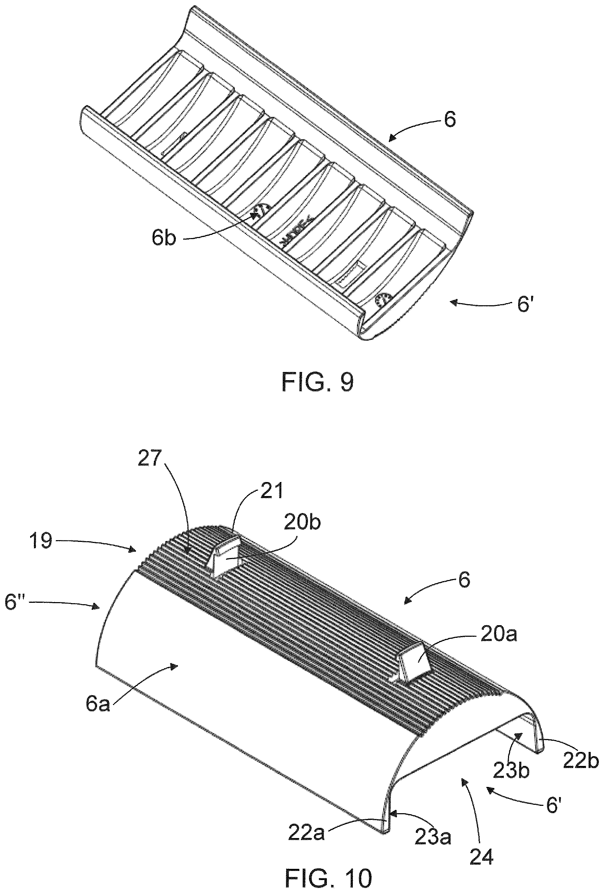

The frame 8 of the arch support 3 comprises in the lateral direction thereof a downward open adjustment aperture 15 that is arranged to extend up to the downward facing side 8b of the frame 8 in the elevation direction of the arch support 3. In the lateral direction of the frame 8 of the arch support 3 the adjustment aperture 15 is arranged to extend over the entire width of the arch support 3. The adjustment aperture 15 is arranged to receive the adjustment part 6 shown in Figures 4 and 5 and later in Figures 9 and 10, with which is it possible to adjust both an angular position of the fender arch 2 in the direction of the work machine wheel circumference and the location of the fender arch 2 in the lateral direction of the work machine wheel.

The adjustment aperture 15 has, as seen in the lateral direction of the frame 8 of the arch support 3, a first open end 15' and an opposite second open end 15". Furthermore the adjustment aperture 15 comprises an upward convex top part 16, or in other words, a curved top part 16 having a shape of a circular arch with a centre of the curvature remaining on the side of the bottom side 8b of the arch support 3 frame 8.

At a culmination point of the convex top part 16 of the adjustment aperture 15, or close to the culmination point of the convex top part 16 of the adjustment aperture 15, there are two neighbouring adjustment regions 17a, 17b, i.e. a first adjustment region 17a and a second adjustment region 17b. The adjustment region 17a, 17b comprises a set of first adjustment elements which in the embodiment of the figures are openings 18a, 18b, 18c, 18d, 18e extending through the frame 8 at the convex top part 16 of the adjustment aperture 15. The first adjustment elements, here openings 18a - 18e, are arranged in the adjustment regions 17a, 17b in the lateral direction of the frame part 8 diagonally side by side, or in other words, next to each other at a distance from each other and at different positions in the circumferential direction of the convex top part 16 along a virtual line extending in a slanted position relative to the lateral direction of the frame part 8.

Figure 9 is a schematic representation of an adjustment part 6 of the fender arch support 3 as seen obliquely from below and Figure 10 is a schematic representation of the adjustment part 6 of Figure 9 as seen obliquely from above. The adjustment part 6 is compatible with the adjustment aperture 15 in the arch support 3 frame part 8.

The adjustment part 6 has a top side 6a or an upward facing side 6a, a bottom side 6b or a downward facing side 6b and in the lateral direction thereof, corresponding to the lateral direction of the arch support 3 frame part 8, a first open end 6' and an opposite second open end 6". Furthermore the adjustment part 6 comprises an upward convex top part 19, or in other words, a curved top part 19 having a shape of a circular arch with a centre of the curvature remaining on the side of the bottom side 6b of the adjustment part 6. A radius of the curvature of the curved top part 19 of the adjustment part 6 is arranged to be compatible with the radius of the curvature of the curved top part 16 of the adjustment opening 15 in such a way that the adjustment part 6 is compatible with the adjustment aperture 15 in the arch support 3 frame part 8 when the adjustment part 6 is inserted into the adjustment aperture 15 in the arch support 3 frame part 8. The open ends 6', 6" of the adjustment part 6 allow the first end 4' of the support arm 4 to be inserted into connection with the bottom side 6b of the adjustment part 6.

At a culmination point of the convex top part 19 of the adjustment part 6, or close to the culmination point of the convex top part 19 of the adjustment part, there are two pieces of second adjustment elements at a distance from each in the lateral direction of the adjustment part 6, the second adjustment elements having a form of extension arms, for example clamping claws 20a, 20b, i.e. a first clamping claw 20a and a second clamping claw 20b that extend upwards from the top part 19 of the adjustment part 6. The clamping claws 20a, 20b are designed to be compatible with the openings 18a - 18e in the adjustment regions 17a, 17b of the frame part 8 of the arch support 3 such that the clamping claws 20a, 20b may be inserted through the openings 18a - 18e and become fastened with an edge of the opening 18 by a claw 21 at a distal end of the clamping claw 20a, 20b and a springback factor provided by a somewhat bendable design of the clamping claw 20a, 20b relative to the top part 19 of the adjustment part 6.

The clamping claws 20a, 20b are arranged at a distance apart from each other in the afore mentioned lateral direction of the adjustment part 6 in such a way that the first clamping claw 20a may be inserted through a specific opening 18a - 18e in the first adjustment region 17a in the frame part 8 of the arch support 3 and the second clamping claw 20a may become inserted through a respective opening 18a - 18e in the second adjustment region 17b in the frame part 8 of the anchor support 3 when the adjustment part 6 is positioned into the adjustment aperture 15 in the arch support 3 frame part 8 and fastened thereto by the clamping claws 20a, 20b. When the adjustment part 6 is arranged into the adjustment aperture 15 and the clamping claws 20a, 20b have been inserted through the respective openings 18a - 18e in the adjustment regions 17a, 17b, vertical edges of the respective openings 18a - 18e remain between an upper surface of the convex top part 19 of the adjustment part 6 and the claws 21 at the distal ends of the clamping claws 20a, 20b, whereby adjustment part 6 is locked to the adjustment aperture 15 in such a way that they are immovable relative to each other.

At a bottom part of the adjustment part 6 there are flanges 22a, 22b extending downwards from the opposite bottom ends of the convex top part 19. The flanges 22a, 22b thus extend in a substantially parallel way in the lateral direction of the adjustment part 6 at a distance from each other. The flanges 22a, 22b comprise substantially vertically straight inner surfaces 23a, 23b that define at the bottom part of the adjustment part 6 an open portion 24 into which the first end 4' of the support arm 4 is inserted when the arch support 3 is fastened to the support arm 4.

The fender structure 1 disclosed is assembled as follows. The adjustment part 6 is inserted into the adjustment aperture 15 in the frame part 8 of the arch support 3 in such a way that the first clamping claw 20a is inserted for example through the opening 18c in the first adjustment region 17a in the frame part 8 of the arch support 3 and the second clamping claw 20b is inserted through the respective opening 18c in the second adjustment region 17b in the frame part 8 of the arch support 3. The clamping claws 20a, 20b and the claws 21 at the distal ends thereof lock the adjustment part 6 relative to the arch support 3 frame part 8 such that the arch support 3 frame part 8 and the adjustment part 6 are not able to rotate relative to each other or to move horizontally relative to each other.

After that the first end 4' of the support arm 4 is inserted into the open portion 24 in the adjustment part 6. Then the clamping part 7 is set below the first end 4' of the support arm 4 and fastening means, such as screws or bolts, are inserted through fastening openings 25 in the clamping part 7 up to fastening openings 26 at the bottom side 8b of the arch support 3 frame part 8 and are tightened so as to provide a clamping between the arch support 3 and the first end 4' of the support arm 4. Vertical side walls of the support arm 4 formed of a rectangular pipe and the inner surfaces 23a, 23b of the skirts 22a, 22b in the adjustment part 6 provide counterpart support surfaces which prevent the arch support 3 to unintentionally rotate about the support arm 4. Before providing a final tightening of the arch support 3 to the support arm 4 the arch support 3 may be moved along the support arm 4 to an intended position in the lateral direction of the wheel of the work machine. Before or after the final tightening of the arch support 3 to the support arm 4 the fender arch 2 is fastened to the arch support 3.

After the frame part 8, adjustment part 6, the support arm 4 and the clamping part 7 are assembled together, the adjustment part 6, the support arm 4, the clamping part 7 and the screws or bolts inserted through the fastening openings 25 in the clamping part 7 up to fastening openings 26 at the bottom side 8b of the arch support 3 frame part 8 prevent the adjustment aperture 15 from buckling during the loading of the frame part 8. The clamping part 7 provides also a protective element that protects the intermediate portion of the arch support 3 against external underneath impacts caused for example by rocks or stones thrown by rotating wheels of the work machine.

When the angular position of the fender arch 2 is adjusted, the arch support 3 comprising the adjustment part 6 and the fender arch 2 attached to the arch support 3 are detached from the support arm 4. The fender arch 2 is detached from the arch support 3 unless it has been detached from the arch support 3 already before detaching the arch support 3 from the support arm 4. Thereafter the adjustment part 6 is detached from the arch support 3 frame part 8 by removing the clamping jaws 20a, 20b away from those openings 18a - 18e into which they were originally inserted. Then the clamping claws 20a, 20b of the adjustment part 6 are inserted through those openings 18a - 18e in the adjustment regions 17a, 17b of the arch support 3 which will provide the intended new angular position of the fender arch 2 relative to the wheel of the work machine. Thereafter the arch support 3 comprising the adjustment part 6 is tightened in place at the support arm 4 and the fender arch 2 is fastened to the arch support 3.

The adjustment part 6 may also be replaceable, whereby it is possible to use support arms 4 of different size and shape with the same frame part 8 of the arch support 3.

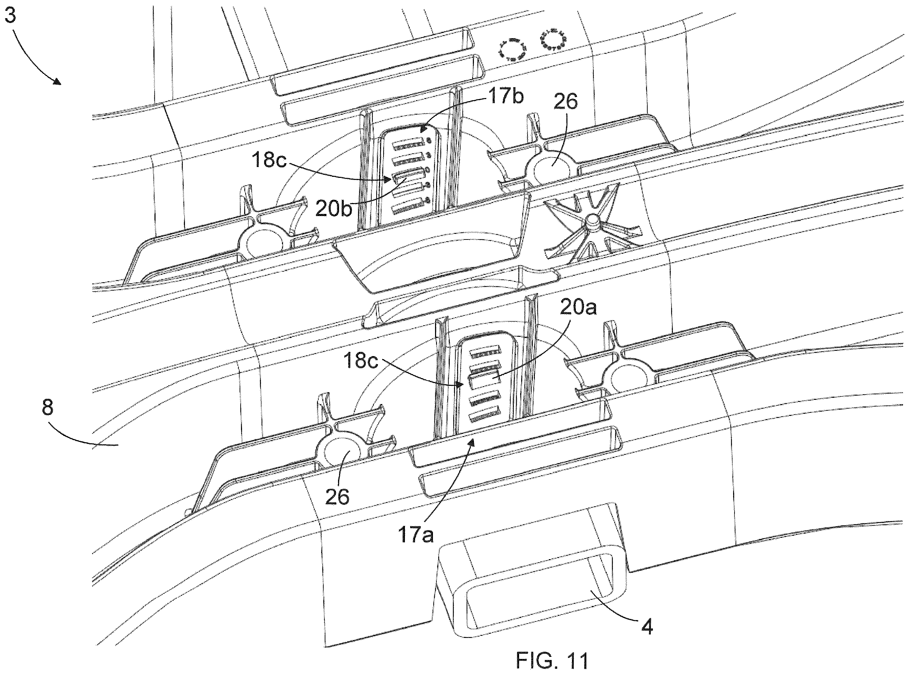

Figures 11, 12 and 13 are schematic representations, as seen obliquely from above, of a part of the fender arch support 3 of Figures 6 and 7 with the adjustment part 6 of Figures 9 and 10 being placed in the fender arch support 3 in various positions.

In the example of Figure 11 the arch support 3 frame part 8 and the adjustment part 6 are arranged relative to each other to such a position, that the first clamping claw 20a in the adjustment part 6 is inserted through the middlemost opening 18c in the first adjustment region 17a in the arch support 3 and the second clamping claw 20b in the adjustment part 6 is inserted through the middlemost openings 18c in the second adjustment region 17b in the arch support 3. The middlemost openings 18c in the first and second adjustment regions 17a, 17b are intended to provide a neutral positioning of the arch support 3 and the fender arch 2 attached to it so that the fender arch 2 is intended to become positioned to such a position wherein the fender arch 2 is not intended to be tilted or slanted either backwards or forwards relative to the wheel of the work machine. In other words, when the clamping claws 20a, 20b are inserted through the middlemost openings 18c in the adjustment regions 17a, 17b, the arch support 3 and the fender arch 2 supported thereto are preferably arranged to align substantially horizontally or substantially symmetrically relative to the wheel or relative to a vertical axis extending through a hub of the wheel of the work machine.

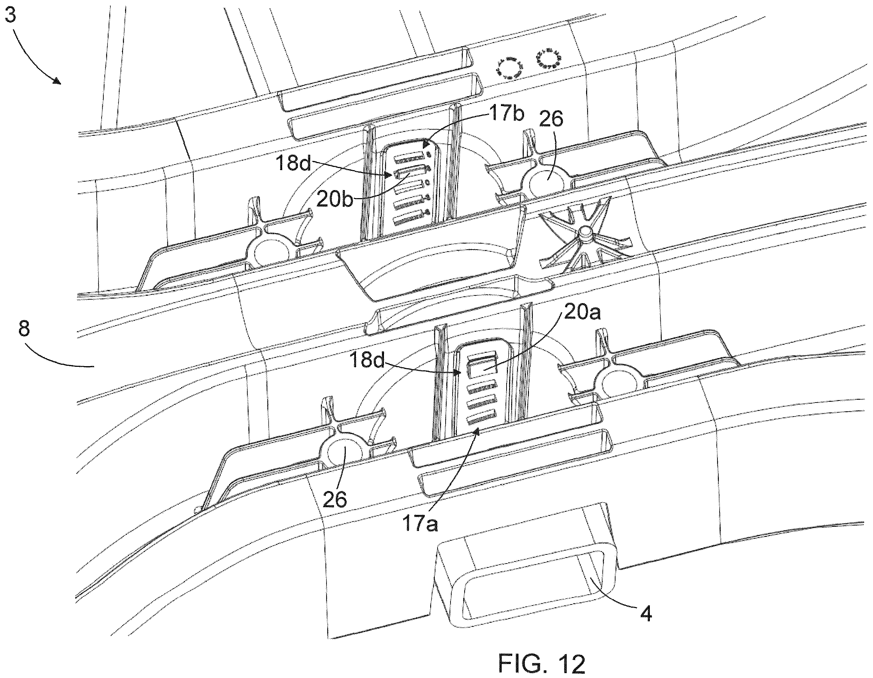

In the example of Figure 12 the arch support 3 frame part 8 and the adjustment part 6 are arranged relative to each other to such a position, that the first clamping claw 20a in the adjustment part 6 is inserted through the opening 18d in the first adjustment region 17a in the arch support 3 and the second clamping claw 20b in the adjustment part 6 is inserted through the corresponding opening 18d in the second adjustment region 17b in the arch support 3. When comparing to the example of Figure 11, this can be done by bending the clamping jaws 20a, 20b towards each other so that the jaws 21 at the distal ends of the clamping jaws 20a, 20b come off the contact with the edges of the openings 18c. At the same time the adjustment part 6 is pulled away from the arch support 3 frame part 8, whereby the clamping jaws 20a, 20b come out of the openings 18c. Thereafter the arch support 3 frame part 8 and the adjustment part 6 are rotated and moved laterally relative to each other so as to bring the clamping jaws 20a, 20b at the openings 18d in the adjustment aperture 15 and the clamping claws 20a, 20b are inserted through the openings 18d. In the example of Figure 12 the arch support 3 frame part 8 is rotated clockwise relative to the adjustment part 6 when compared to the position of the arch support 3 frame part 8 in the example of Figure 11, whereby in the example of Figure 12 the fender arch 2 to be fastened to the arch support 3 will be somewhat tilted or slanted to the right when compared to the example of Figure 11.

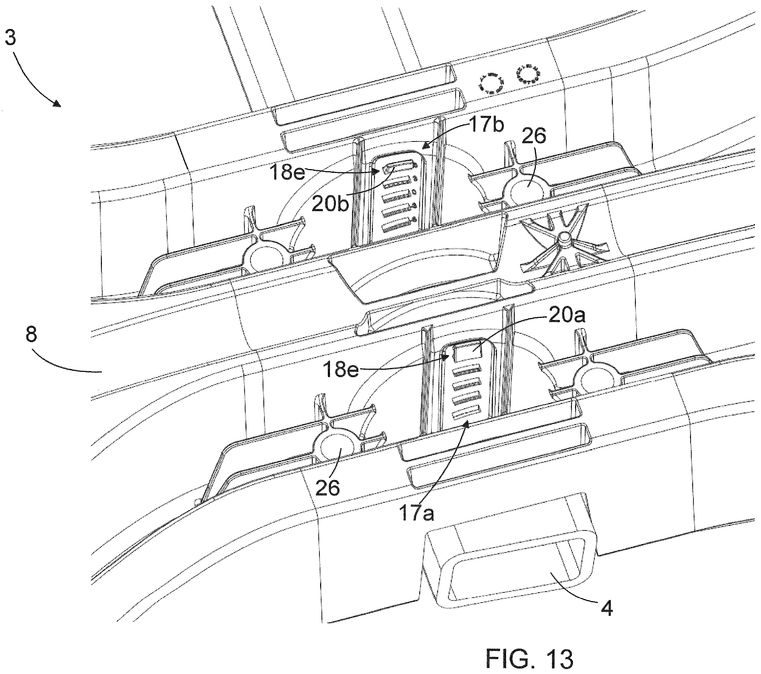

In the example of Figure 13 the arch support 3 frame part 8 and the adjustment part 6 are arranged relative to each other to such a position, that the first clamping claw 20a in the adjustment part 6 is inserted through the opening 18e in the first adjustment region 17a in the arch support 3 and the second clamping claw 20b in the adjustment part 6 is inserted through the corresponding opening 18e in the second adjustment region 17b in the arch support 3. In the example of Figure 13 the arch support 3 frame part 8 is rotated clockwise relative to the adjustment part 6 even more when compared to the position of the arch support 3 frame part 8 in the example of Figure 12, whereby in the example of Figure 13 the fender arch 2 to be fastened to the arch support 3 will be tilted or slanted more to the right when compared to the example of Figure 12.

If the arch support 3 frame part 8 and the adjustment part 6 are arranged relative to each other to such a position, that the first clamping claw 20a in the adjustment part 6 is inserted through the opening 18a or opening 18b in the first adjustment region 17a in the arch support 3 and the second clamping claw 20b in the adjustment part 6 is inserted through the corresponding opening 18a or opening 18b in the second adjustment region 17b in the arch support 3, the fender arch 2 to be fastened to the arch support 3 will be tilted or slanted to the left accordingly.

An amount of the adjustment of an angular position of the arch support 3 and the fender arch 2 attached thereto depends on the positioning of the openings 18a - 18e relative to each other in the circumferential direction of the convex top part 16 of the adjustment aperture 15 in the arch support 3 frame part 8. According to an embodiment the amount of the adjustment of the angular position between two neighbouring openings in the group of the openings 18a - 18e may for example be three degrees.

According to an embodiment an outer surface of the convex top part 19 of the adjustment part 6 comprises a corrugation 27 and an inner surface of the convex top part 16 of the adjustment aperture 15 comprises a corrugation 28 compatible to the corrugation 27 in the adjustment part 6, whereby the rotation of the arch support 3 frame part 8 and the adjustment part 6 relative to each other is not prevented only by the clamping claws 20a, 20b of the adjustment part 6 inserted through the openings 18a - 18e in the adjustment regions 17a, 17b in the arch support 3 frame part 8 but also by the above mentioned corrugations 27, 28 that are arranged to mesh with each other when the adjustment part 6 is inserted into the adjustment opening 15 in the arch support 3 frame part 8.

The arch support 3 and the related adjustment part 6 may be made of many different materials but preferably they are made of plastic. A plastic arch support may be made by injection moulding, for instance. During the injection moulding step, it is possible to use an insert made of metal or a composite material, for instance, around which the plastic material of the arch support 3 frame part 8 is moulded, the insert forming a structure stiffening the frame part. Further, other types of inserts, such as nut inserts for example for receiving the aforementioned fastening means for fastening the clamping part 7 to the arch support 3 frame part 8, can be arranged in the mould. In comparison with a metal arch support, an arch support made at least mainly of plastic is lighter, whereby the total weight of the fender structure 1 becomes smaller and the weight or stress directed to the support arm is smaller, which may, if desired, be taken into consideration in the dimensioning and material selection of the support arm 4. Further, in comparison with a metal arch support, an injection-moulded plastic arch support leaves no waste material during manufacturing, which is usual when using metal manufacturing blanks. This reduces costs related to the transportation and waste disposal of the manufacturing material. In addition, an arch support made of a plastic material has, due to its generally good corrosion resistance, a longer service life than arch supports made of metal.

According to an alternative, the plastic material may be polyethylene, such as high density polyethylene, which may or may not be fibre-reinforced. According to another alternative, the plastic material may be polypropylene or polyamide or fibre-reinforced polypropylene or polyamide. An advantage of the fibre-reinforced polypropylene and polyamide is the shock resistance and torsional and bending stiffness of said materials even when cold. In addition, said materials endure well chemicals, UV radiation and other corresponding environmental factors. An advantage of polypropylene over polyamide is its lower price.

The adjustment part 6 may be made of same or different material than the arch support 3 frame part.

The clamping part 7 may be made for example of electroplated or stainless sheet metal.

It will be obvious to a person skilled in the art that, as the technology advances, the inventive concept can be implemented in various ways. The invention and its embodiments are not limited to the examples described above but may vary within the scope of the claims.

In the examples above there are two adjustment regions in the frame part of the arch support and one extension arm in the adjustment part for each adjustment region. However, there may be any number of adjustment regions and first adjustment elements in the adjustment regions in the frame part of the arch support and any number of second adjustment elements suitably arranged on the convex top part of the adjustment part. According to an embodiment the first adjustment elements in the adjustment regions may also be arranged on straight lines extending along the circumferential direction of the convex top part of the adjustment aperture, whereby the relative position of the arch support frame part and the adjustment part is adjustable also by rotating the frame part and the adjustment part relative to each other.

The design or implementation of the first and second adjustment elements may also differ from those disclosed herein as long as the first and second adjustment elements are compatible with each other such that the frame part and the adjustment part may be locked immovably to each other.

## Claims

1. An arch support (3) for a work machine fender arch (2), the arch support intended to be fastened to the fender arch (2) on its downward facing side to support the fender arch (2) to retain its shape, the arch support (3) comprising a frame part (8), an adjustment aperture (15) in the frame part (8) and an adjustment part (6) arrangeable into the adjustment aperture (15) in the frame part (8), wherein
the adjustment aperture (15) is arranged to extend up to a downward facing side (8b) of the frame part (8) and comprises an upwards convex top part (16) comprising at least one adjustment region (17a, 17b) comprising a set of first adjustment elements,
the adjustment part (6) comprises an upwards convex top part (19) being compatible with the upwards convex top part (16) of the adjustment aperture (15), the top part (19) of the adjustment part (6) comprising at least one second adjustment element to be arranged in connection with the first adjustment element in the adjustment aperture (15) in the frame part (8), and wherein
the relative position of the arch support (3) frame part (8) and the adjustment part (6) is adjustable by at least rotating the frame part (8) and the adjustment part (6) relative to each other to adjust a position of the fender arch (2) to be fastened to the arch support (3), **characterized in that**
the first adjustment element is an opening (18a, 18b, 18c, 18d, 18e) arranged to extend through the convex top part (16) of the adjustment aperture (15) and that the second adjustment element is an extension arm extending upwards from the top part (19) of the adjustment part (6) and arranged to be inserted through the opening (18a, 18b, 18c, 18d, 18e) so as to lock the adjustment part (6) immovably relative to the frame part (8).

2. An arch support as claimed in claim 1, **characterized in that** the adjustment aperture (15) comprises at least two adjustment regions (17a, 17b) comprising a set of the first adjustment elements and that the adjustment part (6) comprises at least one second adjustment element for each adjustment region (17a, 17b) in the adjustment aperture (15).

3. An arch support as claimed in claim 2, **characterized in that** the first adjustment elements in the set of the first adjustment elements in the frame part (8) are arranged diagonally side by side and that the number of the second adjustment elements in the adjustment part (6) are arranged at a distance from each other at a culmination of the convex top part (19) of the adjustment part (6), whereby the relative position of the arch support (3) frame part (8) and the adjustment part (6) is adjustable by rotating and laterally moving the frame part (8) and the adjustment part (6) relative to each other to adjust a position of the fender arch (3) to be fastened to the arch support (3).

4. An arch support as claimed in any one of the preceding claims, **characterized in that** the extension arm is a bendable clamping claw (20a, 20b) arranged to be inserted through the opening (18a, 18b, 18c, 18d, 18e) providing the first adjustment element, the clamping claw (20a, 20b) comprising at a distal end a claw (21) arranged to contact with an upper surface of the convex top part (16) of the adjustment aperture (15).

5. An arch support as claimed in any one of the preceding claims, **characterized in that** an inner surface of the top part (16) of the adjustment aperture (15) comprises a corrugation (28) and that an outer surface of the top part (19) of the adjustment part (6) comprises a corrugation (27) compatible with the corrugation (28) in the adjustment aperture (15).

6. An arch support as claimed in any one of the preceding claims, **characterized in that** the adjustment part (6) further comprises at a bottom part thereof an open portion (24) for receiving a support arm (4) for connecting the arch support (3) to the work machine

7. An arch support as claimed in claim 6, **characterized in that** the bottom part of the adjustment part (6) comprises at least two parallel opposite surfaces (23a, 23b) extending in a lateral direction of the adjustment part (6) and contributing to define the open portion (24) for receiving the support arm (4).

8. An arch support as claimed in any one of the preceding claims, **characterized in that** the frame part (8) of the arch support (3) and the adjustment part (6) are made of plastic material.

9. An arch support as claimed in claim 8, **characterized in that** the plastic material is high density polyethylene.

10. A work machine fender structure (1) comprising a fender arch (2) and an arch support (3) arranged to the fender arch (2), **characterized in that** the arch support (3) is an arch support (3) as claimed in any one of claims 1 to 9.

11. A work machine fender structure as claimed in claim 10, **characterized in that** the fender structure (1) comprises a support arm (4) for connecting the arch support (3) to the work machine.

12. A work machine fender structure as claimed in claim 11,**characterized in that** the bottom part of the adjustment part (6) comprises at least two parallel opposite surfaces (23a, 23b) extending in a lateral direction of the adjustment part (6) and contributing to define the open portion (24) for receiving the support arm (4) and that the support arm (4) is a rectangular pipe comprising vertical side surfaces so as to provide counterpart support surfaces for the surfaces (23a, 23b) contributing to define the open portion (24) in the adjustment part (6) for receiving the support arm (4) in the adjustment part (6), the vertical side surfaces of the support arm (4) together with the surfaces (23a, 23b) contributing to define the open portion (24) in the adjustment part (6) preventing the rotation of the adjustment part (6) and the arch support (3) frame part (8) relative to the support arm (4).

13. A work machine fender structure as claimed in any one of claims 10 - 12, **characterized in that** the fender structure comprises a clamping part (7) for fastening the arch support to the support arm.

## Patentansprüche

1. Bogenträger (3) für einen Arbeitsmaschinenkotflügelbogen (2), wobei der Bogenträger am Kotflügelbogen (2) auf dessen nach unten weisenden Seite befestigt werden soll, um den Kotflügelbogen (2) zu tragen, damit er seine Form behält, wobei der Bogenträger (3) ein Rahmenteil (8), einen Einstellungsdurchlass (15) im Rahmenteil (8) und ein Einstellungsteil (6), das in den Einstellungsdurchlass (15) im Rahmenteil (8) anordenbar ist, umfasst, wobei
der Einstellungsdurchlass (15) angeordnet ist, sich nach oben zu einer nach unten weisenden Seite (8b) des Rahmenteils (8) zu erstrecken, und ein nach oben konvexes oberes Teil (16) umfasst, das mindestens einen Einstellbereich (17a, 17b) umfasst, der einen Satz von ersten Einstellelementen umfasst,
das Einstellungsteil (6) ein nach oben konvexes oberes Teil (19) umfasst, das mit dem nach oben konvexen oberen Teil (16) des Einstellungsdurchlasses (15) kompatibel ist, wobei das obere Teil (19) des Einstellungsteils (6) mindestens ein zweites Einstellelement umfasst, das in Verbindung mit dem ersten Einstellelement im Einstellungsdurchlass (15) im Rahmenteil (8) anzuordnen ist, und wobei
die relative Position des Bogenträger (3)-Rahmenteils (8) und des Einstellungsteils (6) mindestens durch Drehen des Rahmenteils (8) und des Einstellungsteils (6) relativ zueinander einstellbar ist, um eine Position des Kotflügelbogens (2), der am Bogenträger (3) zu befestigen ist, einzustellen, **dadurch gekennzeichnet, dass**
das erste Einstellelement eine Öffnung (18a, 18b, 18c, 18d, 18e) ist, die angeordnet ist, sich durch das konvexe obere Teil (16) des Einstellungsdurchlasses (15) zu erstrecken, und dass das zweite Einstellelement ein Verlängerungsarm ist, der sich vom oberen Teil (19) des Einstellungsteils (6) nach oben erstreckt und angeordnet ist, durch die Öffnung (18a, 18b, 18c, 18d, 18e) gesteckt zu werden, um das Einstellungsteil (6) relativ zum Rahmenteil (8) unbewegbar zu verriegeln.

2. Bogenträger nach Anspruch 1, **dadurch gekennzeichnet, dass** der Einstellungsdurchlass (15) mindestens zwei Einstellbereiche (17a, 17b) umfasst, der einen Satz von ersten Einstellelementen umfasst, und dass das Einstellungsteil (6) mindestens ein zweites Einstellelement für jeden Einstellbereich (17a, 17b) im Einstellungsdurchlass (15) umfasst.

3. Bogenträger nach Anspruch 2, **dadurch gekennzeichnet, dass** die ersten Einstellelemente im Satz der ersten Einstellelemente im Rahmenteil (8) Seite an Seite diagonal angeordnet sind und dass die Anzahl der zweiten Einstellelemente im Einstellungsdurchlass (6) an einem Gipfelpunkt des konvexen oberen Teils (19) des Einstellungsteils (6) in einem Abstand zueinander angeordnet sind, wodurch die relative Position des Bogenträger(3)-Rahmenteils (8) und des Einstellungsteils (6) durch Drehen und seitliches Bewegen des Rahmenteils (8) und des Einstellungsteils (6) relativ zueinander einstellbar ist, um eine Position des Kotflügelbogens (2), der am Bogenträger (3) zu befestigen ist, einzustellen.

4. Bogenträger nach einem der vorhergehenden Ansprüche, **dadurch gekennzeichnet, dass** der Verlängerungsarm eine biegbare Spannpratze (20a, 20b) ist, die angeordnet ist, durch die Öffnung (18a, 18b, 18c, 18d, 18e) gesteckt zu werden, um das erste Einstellelement bereitzustellen, wobei die Spannpratze (20a, 20b) am distalen Ende eine Pratze (21) umfasst, die angeordnet ist, eine obere Fläche des konvexen oberen Teils (16) des Einstellungsdurchlasses (15) zu berühren.

5. Bogenträger nach einem der vorhergehenden Ansprüche, **dadurch gekennzeichnet, dass** eine Innenfläche des oberen Teils (16) des Einstellungsdurchlasses (15) eine Wellung (28) umfasst und dass eine Außenfläche des oberen Teils (19) des Einstellungsteils (6) eine Wellung (27) umfasst, die mit der Wellung (28) im Einstellungsdurchlass (15) kompatibel ist.

6. Bogenträger nach einem der vorhergehenden Ansprüche, **dadurch gekennzeichnet, dass** das Einstellungsteil (6) in einem unteren Teil davon ferner einen offenen Abschnitt (24) zum Aufnehmen eines Tragarms (4) zum Verbinden des Bogenträgers (3) mit der Arbeitsmaschine umfasst.

7. Bogenträger nach Anspruch 6, **dadurch gekennzeichnet, dass** der untere Teil des Einstellungsteils (6) mindestens zwei parallele gegenüberliegende Flächen (23a, 23b) umfasst, die sich in eine Seitenrichtung des Einstellungsteils (6) erstrecken und dazu beitragen, den offenen Abschnitt (24) zum Aufnehmen des Tragarms (4) zu definieren.

8. Bogenträger nach einem der vorhergehenden Ansprüche, **dadurch gekennzeichnet, dass** der Rahmenteil (8) des Bogenträgers (3) und das Einstellungsteil (6) aus Kunststoffmaterial bestehen.

9. Bogenträger nach Anspruch 8, **dadurch gekennzeichnet, dass** das Kunststoffmaterial hochdichtes Polyethylen ist.

10. Arbeitsmaschinenkotflügelstruktur (1), die einen Kotflügelbogen (2) und einen Bogenträger (3), der am Kotflügelbogen (2) angeordnet ist, umfasst, **dadurch gekennzeichnet, dass** der Bogenträger (3) ein Bogenträger (3) nach einem der Ansprüche 1 bis 9 ist.

11. Arbeitsmaschinenkotflügelstruktur nach Anspruch 10, **dadurch gekennzeichnet, dass** die Kotflügelstruktur (1) einen Tragarm (4) zum Verbinden des Bogenträgers (3) mit der Arbeitsmaschine umfasst.

12. Arbeitsmaschinenkotflügelstruktur nach Anspruch 11, **dadurch gekennzeichnet, dass** der untere Teil des Einstellungsteils (6) mindestens zwei parallele gegenüberliegende Flächen (23a, 23b) umfasst, die sich in eine Seitenrichtung des Einstellungsteils (6) erstrecken und dazu beitragen, den offenen Abschnitt (24) zum Aufnehmen des Tragarms (4) zu definieren, und dass der Tragarm (4) ein rechteckiges Rohr ist, das vertikale Seitenflächen umfasst, um gegenstückige Tragflächen für die Flächen (23a, 23b) bereitzustellen, die dazu beitragen, den offenen Abschnitt (24) im Einstellungsteil (6) zum Aufnehmen des Tragarms (4) im Einstellungsteil (6) zu definieren, wobei die vertikalen Seitenflächen des Tragarms (4) zusammen mit den Flächen (23a, 23b) dazu beitragen, den offenen Abschnitt (24) im Einstellungsteil (6) zu definieren, wodurch die Drehung des Einstellungsteils (6) und des Bogenträger(3)-Rahmenteils (8) relativ zum Tragarm (4) verhindert wird.

13. Arbeitsmaschinenkotflügelstruktur nach einem der Ansprüche 10-12, **dadurch gekennzeichnet, dass** die Kotflügelstruktur ein Spannteil (7) zum Befestigen des Bogenträgers am Tragarm umfasst.

## Revendications

1. Support d'arc (3) pour un arc de garde-boue (2) de machine de travail, le support d'arc étant prévu pour être fixé sur l'arc de garde-boue (2) du côté orienté vers le bas afin de supporter d'arc de garde-boue (2) pour conserver sa forme, le support d'arc (3) comprenant une partie de bâti (8), une ouverture d'ajustement (15) dans la partie de bâti (8) et une partie d'ajustement (6) pouvant être agencée dans l'ouverture d'ajustement (15) dans la partie de bâti (8), dans lequel :
l'ouverture d'ajustement (15) est agencée pour s'étendre jusqu'à un côté orienté vers le bas (8b) de la partie de bâti (8) et comprend une partie supérieure convexe vers le haut (16) comprenant au moins une région d'ajustement (17a, 17b) comprenant un ensemble de premiers éléments d'ajustement,
la partie d'ajustement (6) comprend une partie supérieure convexe vers le haut (19) qui est compatible avec la partie supérieure convexe vers le haut (16) de l'ouverture d'ajustement (15), la partie supérieure (19) de la partie d'ajustement (6) comprenant au moins un second élément d'ajustement à agencer conjointement avec le premier élément d'ajustement dans l'ouverture d'ajustement (15) dans la partie de bâti (8), et dans lequel :
la position relative de la partie de bâti (8) du support d'arc (3) et de la partie d'ajustement (6) est ajustable en faisant au moins tourner la partie de bâti (8) et la partie d'ajustement (6) l'une par rapport à l'autre afin d'ajuster une position de l'arc de garde-boue (2) à fixer sur le support d'arc (3), **caractérisé en ce que** :
le premier élément d'ajustement est une ouverture (18a, 18b, 18c, 18d, 18e) agencée pour s'étendre à travers la partie supérieure convexe (16) de l'ouverture d'ajustement (15) et **en ce que** le second élément d'ajustement est un bras d'extension s'étendant vers le haut à partir de la partie supérieure (19) de la partie d'ajustement (6) et agencé pour être inséré à travers l'ouverture (18a, 18b, 18c, 18d, 18e) afin de verrouiller la partie d'ajustement (6) de manière immobile par rapport à la partie de bâti (8).

2. Support d'arc selon la revendication 1, **caractérisé en ce que** l'ouverture d'ajustement (15) comprend au moins deux régions d'ajustement (17a, 17b) comprenant une ensemble de premiers éléments d'ajustement et **en ce que** la partie d'ajustement (6) comprend au moins un second élément d'ajustement pour chaque région d'ajustement (17a, 17b) dans l'ouverture d'ajustement (15).

3. Support d'arc selon la revendication 2, **caractérisé en ce que** le premiers éléments d'ajustement dans l'ensemble de premiers éléments d'ajustement dans la partie de bâti (8) sont agencés en diagonale côte à côte et **en ce que** le nombre de seconds éléments d'ajustement dans la partie d'ajustement (6) est agencé à une distance les uns des autres à un point culminant de la partie supérieure convexe (19) de la partie d'ajustement (6), moyennant quoi la position relative de la partie de bâti (8) du support d'arc (3) et de la partie d'ajustement (6) est ajustable en faisant tourner et en déplaçant latéralement la partie de bâti (8) et la partie d'ajustement (6) l'une par rapport à l'autre afin d'ajuster une position de l'arc de garde-boue (2) à fixer sur le support d'arc (3).

4. Support d'arc selon l'une quelconque des revendications précédentes, **caractérisé en ce que** le bras d'extension est une griffe de serrage pliable (20a, 20b) agencée pour être insérée à travers l'ouverture (18a, 18b, 18c, 18d, 18e) fournissant le premier élément d'ajustement, la griffe de serrage (20a, 20b) comprenant au niveau d'une extrémité distale, une griffe (21) agencée pour être en contact avec une surface supérieure de la partie supérieure convexe (16) de l'ouverture d'ajustement (15).

5. Support d'arc selon l'une quelconque des revendications précédentes, **caractérisé en ce qu'**une surface interne de la partie supérieure (16) de l'ouverture d'ajustement (15) comprend une ondulation (28) et **en ce qu'**une surface externe de la partie supérieure (19) de la partie d'ajustement (6) comprend une ondulation (27) compatible avec l'ondulation (28) dans l'ouverture d'ajustement (15).

6. Support d'arc selon l'une quelconque des revendications précédentes, **caractérisé en ce que** la partie d'ajustement (6) comprend en outre au niveau de sa partie inférieure, une partie ouverte (24) pour recevoir un bras de support (4) pour raccorder le support d'arc (3) à la machine de travail.

7. Support d'arc selon la revendication 6, **caractérisé en ce que** la partie inférieure de la partie d'ajustement (6) comprend au moins deux surfaces parallèles opposées (23a, 23b) s'étendant dans une direction latérale de la partie d'ajustement (6) et contribuant à définir la partie ouverte (24) pour recevoir le bras de support (4).

8. Support d'arc selon l'une quelconque des revendications précédentes, **caractérisé en ce que** la partie de bâti (8) du support d'arc (3) et la partie d'ajustement (6) sont réalisées à partir de matière plastique.

9. Support d'arc selon la revendication 8, **caractérisé en ce que** la matière plastique est du polyéthylène haute densité.

10. Structure de garde-boue (1) de machine de travail comprenant un arc de garde-boue (2) et un support d'arc (3) agencé sur l'arc de garde-boue (2), **caractérisée en ce que** le support d'arc (3) est un support d'arc (3) selon l'une quelconque des revendications 1 à 9.

11. Structure de garde-boue de machine de travail selon la revendication 10, **caractérisée en ce que** la structure de garde-boue (1) comprend un bras de support (4) pour raccorder le support d'arc (3) à la machine de travail.

12. Structure de garde-boue de machine de travail selon la revendication 11, **caractérisée en ce que** la partie inférieure de la partie d'ajustement (6) comprend au moins deux surfaces parallèles opposées (23a, 23b) s'étendant dans une direction latérale de la partie d'ajustement (6) et contribuant à définir la partie ouverte (24) pour recevoir le bras de support (4) et **en ce que** le bras de support (4) est un tuyau rectangulaire comprenant des surfaces latérales verticales afin de fournir des surfaces de support de contrepartie pour les surfaces (23a, 23b) contribuant à définir la partie ouverte (24) dans la partie d'ajustement (6) pour recevoir le bras de support (4) dans la partie d'ajustement (6), les surfaces latérales verticales du bras de support (4) conjointement avec les surfaces (23a, 23b) contribuant à définir la partie ouverte (24) dans la partie d'ajustement (6) empêchant la rotation du bras d'ajustement (6) et de la partie de bâti (8) du support d'arc (3) par rapport au bras de support (4).

13. Structure de garde-boue de machine de travail selon l'une quelconque des revendications 10 à 12, **caractérisée en ce que** la structure de garde-boue comprend une partie de serrage (7) pour fixer le support d'arc sur le bras de support.
